# EUROPÄISCHE PATENTSCHRIFT

(11) **EP 2 730 457 B1**
(45) Veröffentlichungstag und Bekanntmachung des Hinweises auf die Patenterteilung: **02.05.2018**
(21) Anmeldenummer: 12191709.0
(22) Anmeldetag: 07.11.2012
(51) Int. Cl.: F16H 25/08, B60N 2/06

(54) **Antrieb einer Sitzverstelleinrichtung für Kraftfahrzeuge**
Drive for a seat adjusting device for motor vehicles
Entraînement d'un dispositif de réglage de siège pour véhicules automobiles

(43) Veröffentlichungstag der Anmeldung: 14.05.2014
(73) Patentinhaber: IMS Gear SE & Co. KGaA, 78166 Donaueschingen (DE)
(72) Erfinder: Geiges, Christian, 78176 Blumberg (DE); Hofschulte, Wolfram, 79848 Bonndorf (DE); Wöhrle, Michael, 78078 Niedereschach (DE); Weissenseel, Günter, Virginia Beach, VA Virginia 23452 (US)
(74) Vertreter: Westphal, Mussgnug & Partner Patentanwälte mbB

(56) Entgegenhaltungen:
- DE-A1-102010 063 044
- DE-C1- 10 003 305

## Beschreibung

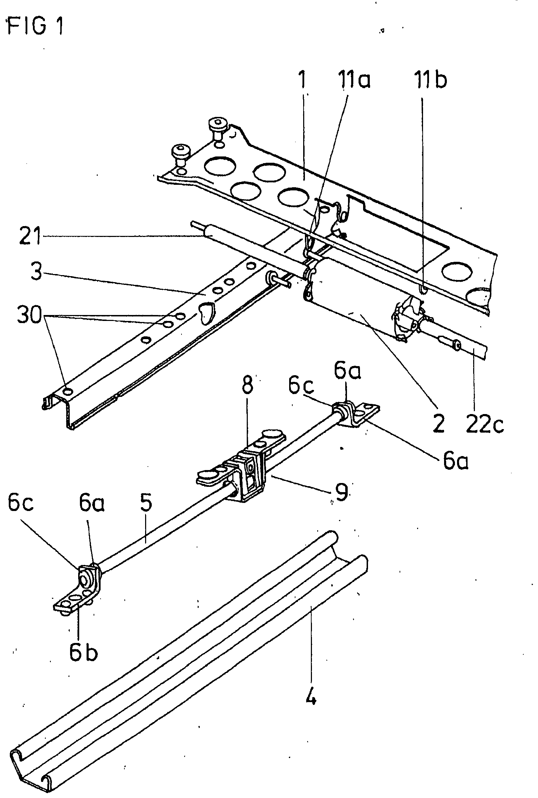

Die Erfindung betrifft eine Sitzverstelleinrichtung für Kraftfahrzeuge mit einer Spindel, welche an einer ersten von zwei relativ zueinander verstellbaren Schienen mittels mindestens einer endseitig an der Spindel befindlichen Halterung befestigt ist, und mit einem von einem Motor antreibbaren Getriebe, das an der zweiten Schiene angeordnet ist.
Eine solche Sitzverstelleinrichtung ist in EP 1 068 093 B1 beschrieben. Der Antrieb ist in der dortigen und in der vorliegenden Figur 1 dargestellt. Wie ersichtlich, ist eine Halteplatte 1, auf der der Sitz eines Kraftfahrzeuges zu befestigen ist, einer Oberschiene 3 zugeordnet. An der Halteplatte 1 sind Befestigungslaschen 11 für einen Motor 2 vorgesehen, sodass dieser fest mit der Halteplatte 1 und damit fest mit der Oberschiene verbunden werden kann. Beidseitig am Motor 2 sind Antriebswellen 21, 22 angeordnet. Hierzu können flexible Wellen verwendet werden. Diese Antriebswellen 21, 22 stellen die Verbindung zu einem Getriebe 9 her, das in der EP 1 068 093 B1 ausführlich beschrieben ist.
Die Oberschiene 3 gleitet direkt oder über nicht dargestellte Verstell- und/oder Lagerelemente auf einer am Fahrzeugboden des Kraftfahrzeuges festgelegten Unterschiene 4.
In Funktionslage der Oberschiene 3 und Unterschiene 4 werden diese durch ihre Berührungs- bzw. Lagerungsbereiche so gehalten, dass sich ein Hohlraum ergibt. Innerhalb dieses Hohlraumes ist eine Gewindespindel 5 angeordnet. Diese Gewindespindel 5 wird zwischen Halterungen 6a und 6b aufgenommen, die auf der Unterschiene 4 fest angeordnet sind. Hierfür verfügen die Halterungen 6a und 6b über Befestigungslöcher 6e, durch welche geeignete Schraubverbindungen oder ähnliche Befestigungsmittel ragen und an Befestigungslöchern 4a der Unterschiene 4 gehalten werden. Die Spindel 5 ist selbst über geeignete Befestigungsmuttern 6c, 6d an die Halterungen 6a und 6b festgeschraubt.
Problematisch bei dem in Figur 1 dargestellten Antrieb ist die Gestaltung der Halterungen 6a und 6b.
Diese L-förmig gestalteten Halterungen 6a, 6b werden regelmäßig als Stanzbiegeteile hergestellt. Dabei werden die Halterungen zunächst als streifenförmige Elemente aus Metallplatten herausgestanzt und anschließend im rechten Winkel gebogen. Solche Stanzbiegeteile sind zwar in der Herstellung verhältnismäßig einfach und damit preisgünstig. Nachteilig ist jedoch die zu geringe Festigkeit dieser Halterungen. Solche Stanzbiegeteile können nämlich nur begrenzte Kräfte im Crashfall aufnehmen. Es hat sich in Versuchen herausgestellt, dass solche Stanzbiegeteile im Crashfall verhältnismäßig geringe Kräfte von bis zu etwa 20 kN verkraften können.

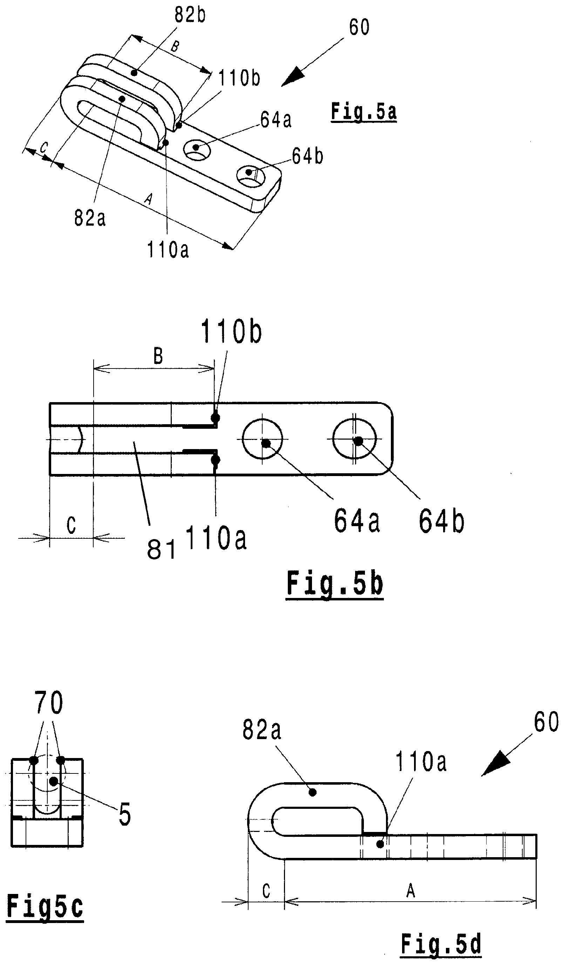

Des Weiteren ist aus der dem Oberbegriff entsprechenden Patentschrift DE 100 03 305 C1 eine weitere Halterung für das Ende einer Spindel für eine Sitzverstellvorrichtung bekannt. Die Halterung in der in Figur 5 beschriebenen Ausführungsform besteht aus einem einstückigen, metallischen Stanzbiegeteil, wobei das Stanzbiegeteil einen vorderen Bereich mit Befestigungsöffnungen zum Befestigen der Halterung an dem Chassis eines Kraftfahrzeuges vorgesehen ist. An ihrem gegenüberliegenden Ende verfügt die Halterung über einen zweiten Bereich zur Aufnahme des Endes einer Spindel der Verstellvorrichtung. Die beiden Bereiche sind über ein Zwischenteil in einstückiger Weise verbunden. Das Aufnahmeteil für die Spindel ist zunächst U-förmig gebogen. In die U-förmige Öffnung wird das Ende der Spindel eingelegt und anschließend die beiden Enden der nach oben offenen Schenkel nach innen über die Spindel umgelegt und verschlossen. Nachdem die beiden Schenkel der U-förmigen Aufnahme umgelegt sind, können diese mittels eines Presswerkzeuges mit dem Ende der Spindel verpresst werden.

Wenngleich eine derartige Halterung bereits eine Verbesserung zu der oben diskutierten Halterung ist, bei der mittels Kontermuttern die Spindel an einem abgewinkelten Stanzbiegeteil festgelegt werden muss, ist immer noch ein verhältnismäßig aufwendiger Verstemmprozess notwendig, um das Ende der Spindel in der Halterung zu fixieren. Zudem sind verschiedene in unterschiedliche Richtungen erforderliche Biegevorgänge zu bewerkstelligen, was die Herstellung der Halterung zeitaufwändig macht. Zusätzlich ist nach dem Einlegen der Spindel in die U-förmige Öffnung der Halterung ein weiterer Biegeprozess der Halterung erforderlich und zusätzlich noch ein Verstemmprozess, was ebenfalls sehr aufwendig ist.

Hier setzt die vorliegende Erfindung an.

Die Erfindung hat das Ziel, die bekannte Sitzverstelleinrichtung so weiterzubilden, dass im Crashfall von der oder den Halterungen höhere Kräfte aufgenommen werden können als dies bisher der Fall war, wobei die Halterung besonders einfach herzustellen sein sowie der Bauraumbedarf reduziert werden soll.

Dieses Ziel wird erreicht durch eine Sitzverstelleinrichtung mit den Merkmalen des Anspruchs 1.

Weiterbildungen der Erfindung sind Gegenstand der Unteransprüche.
Die Erfindung besteht im Wesentlichen darin, dass der ein Ende der Spindel aufnehmende zweite Bereich der Halterung geschlitzt ausgeführt ist mit zumindest abschnittsweise zwei zu einem Schlitz gegenüberliegenden Schenkeln, zwischen denen das Ende der Spindel festgelegt ist.
Der wesentliche Vorteil einer solchen Halterung gegenüber der eingangs genannten Halterung besteht darin, dass die Halterung lediglich Biegeprozesse mit Biegekanten erfordert, die allesamt parallel zueinander liegen, nämlich orthogonal zur Längsachse der Spindel. Ein Biegeprozess in Parallelrichtung zur Spindelachse ist nicht mehr notwendig.
Zudem zeichnet sich die erfindungsgemäße Halterung durch eine hohe Steifigkeit und eine geringe Vorverlagerung aus, so dass die eingangs genannte Aufgabe, eine Sitzverstelleinrichtung anzugeben, bei dem von der oder den Halterungen im Crahsfall höhere Kräfte aufgenommen werden, bestens erfüllt ist.
Die Erfindung wird nachfolgend im Zusammenhang mit drei Ausführungsbeispielen näher erläutert. Es zeigen:
- Figur 1: die bereits erläuterte Sitzverstelleinrichtung nach dem bekannten Stand der Technik mit einer an ihren Enden über Halterungen festgelegten Spindel, auf der ein längsverfahrbares Getriebe sitzt,
- Figuren 2a bis 2d: verschiedene Ansichten eines ersten Ausführungsbeispieles einer Halterung zur Aufnahme des Endes einer Spindel einer Sitzverstelleinrichtung,
- Figuren 3a bis 3d: ein zweites Ausführungsbeispiel einer Halterung zur Aufnahme des Endes einer Spindel einer Sitzverstelleinrichtung,
- Figur 4a bis 4d: ein drittes Ausführungsbeispiel einer Halterung zur Aufnahme des Endes einer Spindel einer Sitzverstelleinrichtung, und
- Figur 5a bis 5d: ein vierten Ausführungsbeispiel einer Halterung zur Aufnahme des Endes einer Spindel einer Sitzverstelleinrichtung.

In den nachfolgenden Figuren bezeichnen, sofern nicht anders angegeben, gleiche Bezugszeichen gleiche Teile mit gleicher Bedeutung.

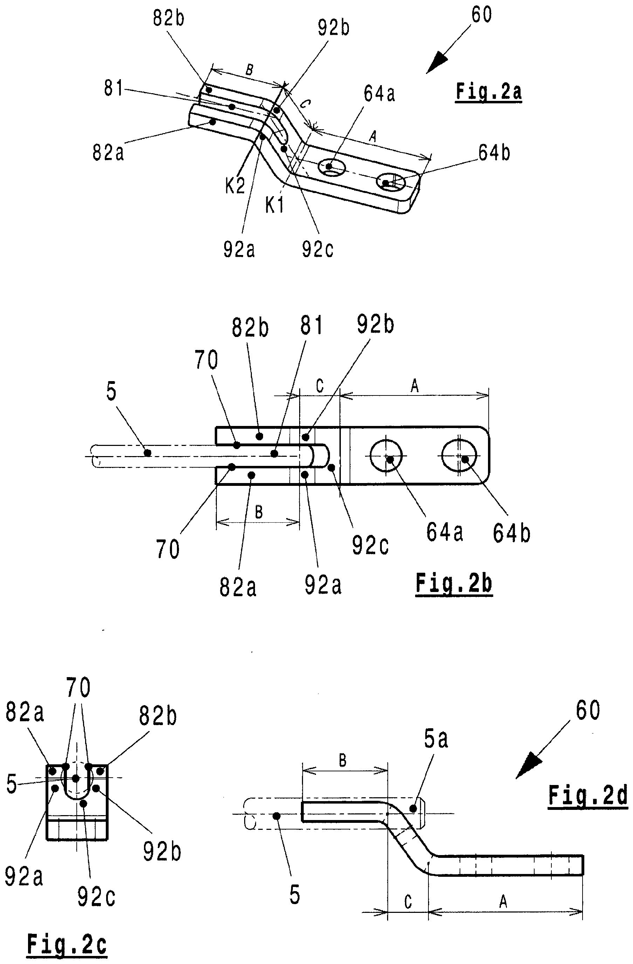

Die in den Figuren 2a bis 2d in verschiedenen Ansichten dargestellte Halterung 60 ist ein mindestens annähernd etwa Z-förmig im Schnitt gesehen gebogenes Stanzbiegeteil das aus Metall, insbesondere aus Stahl oder Stahlblech gebildet sein kann. Wie insbesondere aus der perspektivischen Ansicht von Figur 2a ersichtlich und auch in der Draufsicht von Figur 2b besonders gut erkennbar verfügt die Halterung 60 über einen ersten Bereich A, in den zwei Befestigungsbohrungen 64a, 64b eingearbeitet sind. Diese beiden Befestigungsbohrungen 64a, 64b liegen nebeneinander und sind zum Durchführen von Schraubbefestigungen vorgesehen, um die Halterung 60 an einem Chassisboden eines Kraftfahrzeuges festzuschrauben oder festzunieten.
Wie besonders deutlich die Schnittansicht von Figur 2d zeigt, schließt an diesen ersten Bereich A ein Übergangsbereich C an, welcher entlang einer Biegekante K1 vom ersten Teil A schräg nach oben einstückig weggebogen ist. Dieser Übergangsbereich C ist in etwa U-förmig gestaltet mit zwei zueinander beabstandeten Schenkeln 92a, 92b und einem die beiden Schenkel 92a, 92b an ihrer dem ersten Bereich A zugewandten Seite verbindenden Querschenkel 92c. Von diesem Übergangsbereich C erstreckt sich parallel zum ersten Bereich A ein zweiter Bereich B. Dieser zweite Bereich B besteht aus den beiden Schenkeln 82a, 82b, die unmittelbar eine Verlängerung der Schenkel 92a, 92b des Übergangsbereichs C sind. Zwischen diesen beiden Schenkeln 82a, 82b befindet sich ein Schlitz 81. Die beiden Schenkel 82a, 82b des zweiten Bereichs B liegen auf Grund eines Biegevorgangs entlang einer zweiten Biegekante K2 parallel zum ersten Bereich A.
Wie aus den Darstellungen von Figuren 2a und 2b ersichtlich, bedarf eine derartige Halterung 60 lediglich zweier Biegevorgänge entlag der Biegekanten K1 und K2, die zueinander parallel liegen.
In den Figuren 2b, 2c und 2d ist angedeutet, wie das Ende 5a einer Spindel 5 zwischen die beiden Schenkel 82a, 82b eingelegt ist. Das Ende 5a der Spindel kann dabei an dem Querschenkel 92c im Übergangsbereich C aufliegen. Es ist jedoch vorteilhafter, dass die Spindel 5 dort nicht aufliegt und zum Querschenkel 92c beabstandet angeordnet ist. Eine Befestigung des Endes 5a der Spindel 5 wird dadurch erreicht, dass die Innenseiten der Schenkel 82a, 82b mit dem Ende 5a der Spindel 5 in geeigneter Weise verschweißt bzw. kraft- oder formschlüssig verbunden sind.

Die Schweißnaht ist in Figur 2b und Figur 2c mit den Bezugszeichen 70 versehen.

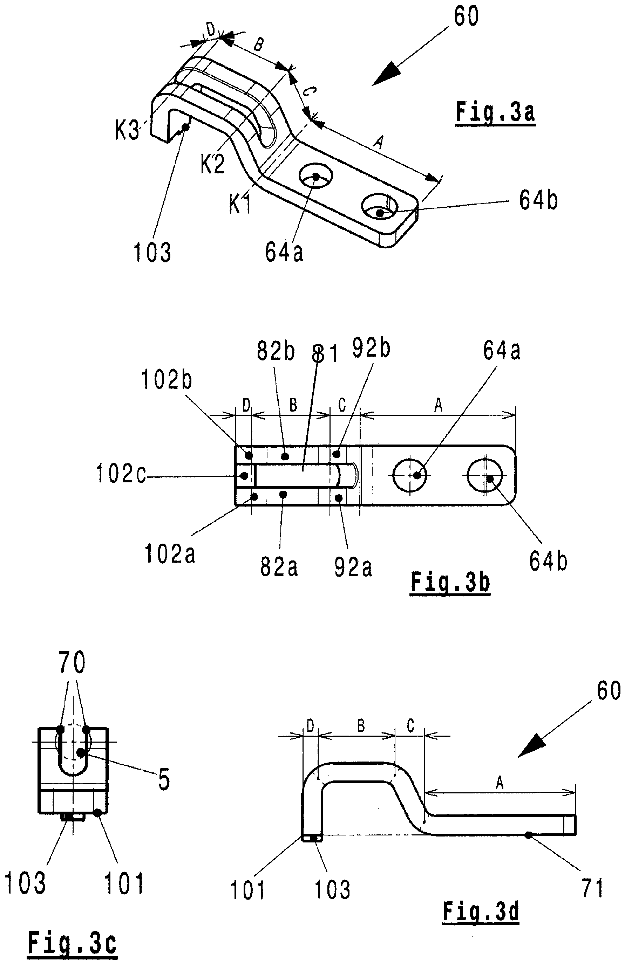

Das Ausführungsbeispiel von Figur 3a bis 3d entspricht weitgehend dem zuvor erläuterten Ausführungsbeispiel in den Figuren 2a bis 2d. Im Unterschied hierzu ist an den zweiten Bereich B ein weiterer Bereich D angeformt, der in etwa U-förmig gestaltet ist und die beiden Schenkel 82a, 82b des zweiten Bereiches etwas verlängert und vertikal in die Ebene eines Bodens 71 der Halterung 60 führt und dort für eine Abstützung der Halterung sorgt. Die Halterung 60 ist in diesem weiteren Bereich D, wie erwähnt, U-förmig gestaltet und weist hierfür zwei Schenkel 102a, 102b auf, die an die freien Enden der Schenkel 82a, 82b des zweiten Bereichs B anschließen und an ihrem Ende über einen Querbügel 102c miteinander verbunden sind. Die Unterseite dieses Querbügels 102c ist mit dem Bezugszeichen 101 versehen und verläuft vorzugsweise planparallel zu dem Boden 71 des Bereiches A der Halterung 60. Von diesen Boden 101 im weiteren Bereich D erstreckt sich vorzugsweise ein Rastnoppen 103 nach unten weg, um in eine entsprechende Ausnehmung des Chassis eines Fahrzeugs einzugreifen, so dass eine ausgezeichnete Lagefixierung der gesamten Halterung 60 gewährleistet ist, die zusätzlich einen Kraftfluss im Crashfall ermöglicht.

Wie die Figuren 3a und 3b zeigen, verfügt die Halterung 60 über eine dritte Biegekante K3 zwischen dem zweiten Bereich B und dem erwähnten weiteren Bereich D. Diese dritte Biegekante K3 liegt wiederum parallel zu den bereits bekannten Biegekanten K1 und K2.

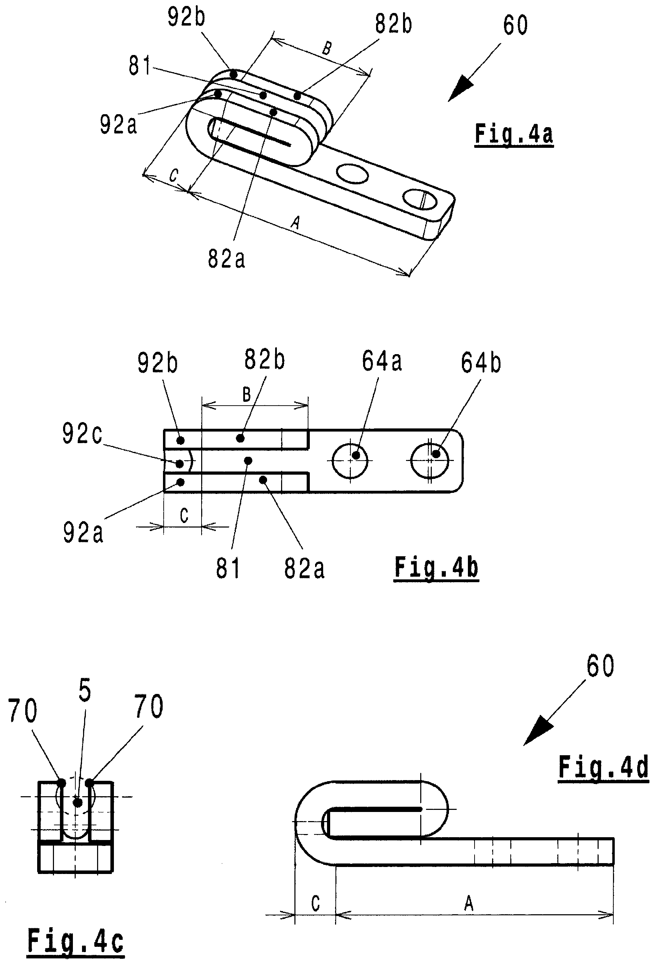

Ein drittes Ausführungsbeispiel einer Halterung nach der Erfindung für das Ende 5a einer Spindel 5 zeigen die Figuren 4a bis 4d. Im Unterschied zu den vorgenannten beiden Ausführungsbeispielen ist jetzt der erste Bereich A in etwa doppelt so lang ausgeführt, wobei der geschlitzte Bereich B über den Zwischenbereich C nicht weg von den Befestigungsbohrungen 64a, 64b gebogen ist, sondern zurück in Richtung zu diesen Bohrungen 64a, 64b.

Der Übergangsbereich C schließt sich einstückig an das linke Ende des ersten Bereiches A an und zwar derart, dass die beiden Schenkel 92a, 92b in Richtung Befestigungsöffnungen 64a, 64b zeigen. An die Enden dieser Schenkel 92a, 92b schließen sich einstückig die Schenkel 82a, 82b an, wobei diese Schenkel 82a, 82b in sich noch einmal um 180° zurückgebogen sind, so dass sich insgesamt eine schleifenförmige Struktur des Bereichs B ergibt. Zwischen den Schenkeln 92a, 92b des Zwischenteils C und den Schenkeln 82a, 82b des zweiten Teils B ist wiederum das Ende einer Spindel 5 einlegbar. Mit geeigneten Schweißverbindungen kann die Spindel 5 in dem Schlitz 81 wiederum festgelegt werden.

Wenngleich bisher im Ausführungsbeispiel der Figuren 4a bis 4d davon die Rede ist, dass die Schenkel 82a, 82b um 180° zurückgebogen sind, ist dies nicht zwingend. Wie in der Schnittansicht von Figur 4d durch die Strichlierung angedeutet, ist es ohne weiteres möglich die Enden der Schlitze 82a, 82b lediglich um 90° nach unten abzuwinkeln, so dass die Enden auf der Oberseite des ersten Bereichs A der Halterung 60 aufsitzen.

Auch hierdurch wird eine ausreichende Stabilität der Halterung 60 gewährleistet.

Es liegt auch im Rahmen der Erfindung, dass die zurückgebogenen Schenkel 82a, 82b unmittelbar auf der Oberseite des Abschnittes A aufliegen und nicht noch einmal an ihren freien Ende umgebogen sind.

In dem vierten Ausführungsbeispiel gemäß den Figuren 5a bis 5d ist eine ähnliche Halterung 60 wie in Figur 4d in der strichlierten Variante dargestellt. Allerdings ragen die Enden der umgebogenen Schenkel 82a, 82b jetzt in zugehörende Öffnungen 110a, 110b hinein, welche in dem ersten Abschnitt A der Halterung 60 links neben der ersten Befestigungsöffnung 64a platziert sind. Durch das Hineinragen der Enden der beiden Schenkel 82a, 82b in diese Öffnungen 110a, 110b wird eine Stabilisierung der Schenkel 82a, 82b erreicht und hierdurch eine hohe Stabilität der zwischen die beiden Schenkel 82a, 82b eingesetzten Spindel 5 im Crashfall.

### Bezugszeichenliste

- 1: Halteplatte
- 2: Antriebsmotor
- 3: Obenschiene
- 4: Untenschiene
- 4a: Befestigungsloch
- 5: Spindel
- 5a: Spindelende
- 6: Halterung
- 6a: Halterung
- 6b: Halterung
- 6c: Befestigungsmutter
- 6d: Befestigungsmutter
- 8: Halterung
- 8a: Befestigungsloch
- 9: Getriebe
- 11: Befestigungslasche
- 21: Antriebswelle
- 22: Antriebswelle
- 60: Halterung
- 64a, 64b: Befestigungsbohrung
- 70: Schweißnaht
- 71: Boden
- 81: Schlitz
- 82a, 82b: Schenkel
- 92a, 92b: Schenkel
- 92c: Querschenkel
- 101: Unterseite
- 102a, 102b: Schenkel
- 102c: Querbügel
- 103: Raststopfen, Rastnoppen
- 110a, 110b: Öffnungen
- A: erster Bereich
- B: zweiter Bereich
- C: Übergangsbereich
- D: weiterer Bereich
- K1: Biegekante
- K2: Biegekante
- K3: Biegekante

## Patentansprüche

1. Sitzverstelleinrichtung insbesondere für Kraftfahrzeuge mit einer Spindel (5), welche an einer ersten (4) von zwei relativ zueinander verstellbaren Schienen (3, 4) mittels mindestens einer endseitig an der Spindel (5) befindlichen Halterung (60) befestigt ist, und mit einem von einem Motor (2) antreibbaren Getriebe (9), das an der zweiten Schiene (3) angeordnet ist, wobei die Halterung (60) ein einteiliges Stanzbiegeteil ist mit einem ersten Bereich (A) mit mindestens einer Befestigungsöffnung (64a, 64b), und mit einem zum ersten Bereich (A) nach oben versetzten zweiten Bereich (B) zur Aufnahme eines Endes (5a) der Spindel (5), wobei der erste Bereich (A) und der zweite Bereich (B) von einem Übergangsbereich (C) einstückig verbunden sind,
**dadurch gekennzeichnet, dass**
der zweite Bereich (B) geschlitzt ausgeführt ist mit zumindest abschnittsweise zwei zu einem Schlitz (81) gegenüberliegenden Schenkeln (82a, 82b), zwischen denen das Ende (5a) der Spindel (5) festlegbar ist, wobei der Übergangsbereich (C) mindestens teilweise ebenfalls geschlitzt ist, in dem sich die beiden Schenkel (82a, 82b) des zweiten Bereichs (B) in den Übergangsbereich (C) als Teilschenkel (92a, 92b) hineinerstrecken und dort von einem Querschenkel (92c) verbunden sind.

2. Sitzverstelleinrichtung nach Anspruch 1,
**dadurch gekennzeichnet, dass**
der erste Bereich (A) und der zweite Bereich (B) in Achsrichtung der Spindel (5) gesehen nebeneinander angeordnet sind und zwischen dem ersten Bereich (A) und dem zweiten Bereich (B) der Übergangsbereich (C) sitzt.

3. Sitzverstelleinrichtung nach Anspruch 1, **dadurch gekennzeichnet, dass**
das Ende (5a) der Spindel (5) zu dem Querschenkel (92c) beabstandet festgelegt ist.

4. Sitzverstelleinrichtung nach einem der Ansprüche 1 bis 3, **dadurch gekennzeichnet, dass**
der von den beiden Schenkeln (82a, 82b) gebildete Schlitz (81) auf seiner zum ersten Bereich (A) abgewandten Seite offen ist.

5. Sitzverstelleinrichtung nach einem der Ansprüche 1 bis 4, **dadurch gekennzeichnet, dass**
die gesamte Halterung (60) in Schnittansicht entlang der Achse der Spindel (5) gesehen mindestens annähernd etwa Z-förmig gebogen ist.

6. Sitzverstelleinrichtung nach einem der Ansprüche 1 bis 3, **dadurch gekennzeichnet, dass** sich an den zweiten Bereich (B) an der dem ersten Bereich
(A) abgewandten Seite ein weiterer Bereich (D) anschließt, dass dieser weitere Bereich (D) U-förmig gestaltet ist und mit seiner offenen Seite an den zweiten Bereich (B) anschließt, wobei ein Boden (101) eines Querbügels (102) dieses weiteren Bereichs (D) in etwa mindestens auf gleicher Höhe wie ein Boden (71) des ersten Bereiches (A) angeordnet ist.

7. Sitzverstelleinrichtung nach Anspruch 6, **dadurch gekennzeichnet, dass**
der Querbügel (102) des weiteren Bereiches (D) einen hervorstehenden Raststopfen (103) aufweist.

8. Sitzverstelleinrichtung nach einem der Ansprüche 1 bis 4, **dadurch gekennzeichnet, dass**
der erste Bereich (A) sich bis unter den zweiten Bereich (B) hineinerstreckt und der zweite Bereich (B) als Viertel- oder Halbschleife über den ersten Bereich (A) angeordnet ist.

## Claims

1. Seat adjusting device, in particular for motor vehicles, comprising a spindle (5) which is fastened on a first one (4) of two rails (3, 4), which are adjustable relative to one another, by means of at least one mounting (60) located at the end of the spindle (5), and a gear mechanism (9) which can be driven by a motor (2) arranged on the second rail (3), wherein the mounting (60) is a one-piece stamped bent part with a first region (A) with at least one fastening opening (64a, 64b), and with a second region (B) which is offset upwards with respect to the first region (A) to hold one end (5a) of the spindle (5), wherein the first region (A) and the second region (B) are connected integrally by a transition region (C), **characterised in that** the second region (B) is slotted, with two legs (82a, 82b) which, at least in sections, lie opposite a slot (81) and between which the end (5a) of the spindle (5) can be fixed, wherein the transition region (C) is also at least partially slotted, wherein the two legs (82a, 82b) of the second region (B) extend into the transition region (C) as part-legs (92a, 92b) and are connected there by a transverse leg (92C).

2. Seat adjusting device according to claim 1, **characterised in that** the first region (A) and the second region (B) are arranged adjacent to one another when viewed in the axial direction of the spindle (5) and the transition region (C) is located between the first region (A) and the second region (B).

3. Seat adjusting device according to claim 1, **characterised in that** the end (5a) of the spindle (5) is fixed at a distance from the transverse leg (92c).

4. Seat adjusting device according to one of claims 1 to 3, **characterised in that** the slot (81) formed by the two legs (82a, 82b) is open on its side facing away from the first region (A).

5. Seat adjusting device according to one of claims 1 to 4, **characterised in that** the entire mounting (60), when viewed in cross-section along the axis of the spindle (5), is bent at least approximately in a Z shape.

6. Seat adjusting device according to one of claims 1 to 3, **characterised in that** a further region (D) adjoins the second region (B) on the side facing away from the first region (A), and **in that** this further region is designed with a U shape and, with its open end, adjoins the second region (B), wherein a base (101) of a transverse clip (102) of this further region (D) is arranged approximately at least the same height as a base (71) of the first region (A).

7. Seat adjusting device according to claim 6, **characterised in that** the transverse clip (102) of the further region (D) has a projecting engaging plug.

8. Seat adjusting device according to one of claims 1 to 4, **characterised in that** the first region (A) extends to below the second region (B) and the second region (B) is arranged as a quarter-loop or half-loop over the first region (A).

## Revendications

1. Dispositif de réglage de siège, en particulier d'un siège de véhicule comprenant une broche (5) qui et fixée sur un premier rail (4) parmi deux rails (3, 4) réglables l'un par rapport à l'autre au moyen d'au moins un élément de support (60) situé à une extrémité de la broche (5), ainsi qu'une transmission (9) pouvant être entraînée par un moteur (2) qui est montée sur le second rail (3), l'élément de support (60) étant une pièce cintrée par estampage en une seule partie comportant une première zone (A) ayant au moins une ouverture de fixation (64a, 64b) ainsi qu'une seconde zone (B) décalée vers le haut par rapport à la première zone (A) permettant la réception d'une extrémité (5a) de la broche (5), la première zone (A) et la seconde zone (B) étant reliées en une seule pièce par une zone de transition (C),
**caractérisé en ce que**
la seconde zone (B) est fendue et comporte au moins par segments deux branches (82a, 82b) opposés de part et d'autre d'une fente (81), entre lesquelles l'extrémité (5a) de la broche (5) peut être fixée, la zone de transition (C) étant également fendue au moins par segments, et les deux branches (82a, 82b) de la seconde zone (B) se prolongeant dans cette zone de transition (C) en tant que branches partielles (92a, 92b) et y étant reliées par une branche transversale (92c).

2. Dispositif de réglage de siège conforme à la revendication 1,
**caractérisé en ce que**
la première zone (A) et la seconde zone (B) sont situées côte à côte dans la direction axiale de la broche (5) et la zone de transition (C) est située entre la première zone (A) et la seconde zone (B).

3. Dispositif de réglage de siège conforme à la revendication 1,
**caractérisé en ce que**
l'extrémité (5a) de la broche (5) est fixée à distance de la branche transversale (92c).

4. Dispositif de réglage de siège conforme à l'une des revendications 1 à 3,
**caractérisé en ce que**
la fente (81) formée par les deux branches (82a, 82b) est ouverte sur son côté situé à l'opposé de la première zone (A).

5. Dispositif de réglage de siège conforme à l'une des revendications 1 à 4,
**caractérisé en ce que**
la totalité de l'élément de support (60) est cintrée approximativement en forme de Z, en vue en coupe le long de l'axe de la broche (5).

6. Dispositif de réglage de siège conforme à l'une des revendications 1 à 3,
**caractérisé en ce que**
sur le côté de la seconde zone (B) opposé à la première zone (A), se connecte une autre zone (D), et cette autre zone (D) est en forme de U et se connecte par son côté ouvert à la seconde zone (B), la base (101) de l'étrier transversale (102) formé par cette autre zone (D) étant située essentiellement au moins à la même hauteur que la base (71) de la première zone (A).

7. Dispositif de réglage de siège conforme à la revendication 6,
**caractérisé en ce que**
l'étrier transversale (102) formé par l'autre zone (D) comporte un tampon d'encliquetage en saillie (103).

8. Dispositif de réglage de siège conforme l'une des revendications 1 à 4,
**caractérisé en ce que**
la première zone (A) se prolonge jusqu'au dessous de la seconde zone (B), et la seconde zone (B) est située au dessus de la première zone (A) sous la forme d'un quart de boucle ou d'une demi boucle.
